# EUROPEAN PATENT SPECIFICATION

(11) **EP 0 647 513 B1**
(45) Date of publication and mention of the grant of the patent: **01.09.1999**
(21) Application number: 94307174.6
(22) Date of filing: 30.09.1994
(51) Int. Cl.: B29C 44/02, B29C 44/44, B29C 44/18

(54) **Molded products reinforced with foam and manufacturing method for them**
Schaumverstärkte Formkörper und Verfahren zu deren Herstellung
Produits moulés renforcés en résine expansée et leur procédé de fabrication

(30) Priority: 12.10.1993 JP 27902093
(43) Date of publication of application: 12.04.1995
(73) Proprietor: GE PLASTICS JAPAN LIMITED, Chuo-Ku, Tokyo (JP)
(72) Inventor: Morioka, Kiyoshi, Susono City, Shizuoka Prefecture (JP); Kumagai, Katsuhisa, Funabashi City, Ciba Prefecture (JP); Ando, Motonari, Ichikawa City, Ciba Prefecture (JP); Harao, Masaru, Koga City, Ibaragi Prefecture (JP); Eguchi, Tatsuya, Shimotsuga-gun, Tochigi Prefecture (JP); Takamatsu, Hideo, Sashima-gun, Ibaragi Prefecture (JP)
(74) Representative: Szary, Anne Catherine, Dr.

(56) References cited:
- CH-A- 400 552
- US-A- 3 941 528
- DATABASE WPI Section Ch, Week 9042 Derwent Publications Ltd., London, GB; Class A32, AN 90-318621 & SU-A-1 549 777 ( GLAVMOSOBLSTROIMATE) , 15 March 1990

## Description

The present invention concerns molded products in which hollow moldings consisting of thermoplastic resin having a heat resistance of at least 100°C have improved rigidity; it also concerns a manufacturing method for such molded products. What is meant here by thermoplastic resin having a heat resistance of at least 100°C is a base resin having a Vicat softening point of at least 100°C.

Its field of application consists of comparatively large board- or panel-shaped molded resin products requiring high rigidity, for example, large molded products such as automobile seat-back panels, rear parcel shelves, and side skirts, as well as front panels, side panels, and modular structural materials for office machines and home electrical/electronic products, and furniture.

### Prior Art

The prior art methods for improving the rigidity of hollow moldings include providing a ribbed structure at the molding stage and injecting urethane foam into the completed molding.

The problems of providing hollow moldings with a ribbed structure include the fact that, especially in blow molding, there are many restrictions on design, geometry, and the positions at which ribs can be located, and that, while areas close to ribs are rigid, rigidity decreases with distance from the ribs.

Further drawbacks of rib structures include the fact that it is difficult to obtain a flat outer surface over the ribs and that the areas around ribs are susceptible to uneven surface gloss.

Injecting urethane foam increases the rigidity of moldings because the foam is injected into the hollow part of the molding. However, a drawback of urethane resin is that, since it is thermoplastic, the recycling processes for used products, e.g., recovering, melting, molding, and the like, are difficult.

Expansion molding methods in which a thermoplastic resin with low heat resistance, for example, particles of polystyrene resin, is expanded inside a blow molding are known in the prior art, and some such products have actually been used. A thermoplastic resin with a low foaming point can be foamed with relative ease in such a method by injecting, for example, expandable resin particles (beads), into the cavity then blowing in regular steam.

CH-A- 400 552 discloses such a method wherein a tabular body with small perforations for spraying steam is inserted through an opening formed in one end of, and into the hollow part of, a hollow molding of synthetic material, the hollow portion of the said hollow molding is packed with particles of an expandable thermoplastic resin, the said hollow molding is fitted in a jig having an internal structure corresponding to the external geometry of the molding, and the said packed expandable thermoplastic resin particles are expanded and fused by introducing steam through the said tabular body into the hollow molding.

However, a drawback of such products is poor heat resistance; for example, providing a baked finish causes thermal deformation. Having an outer skin and inner foam of the same material is preferable from the standpoint of recyclability. Such highly heat-resistant thermoplastic resins must be heated sufficiently in order to be expanded, and the prior art methods cannot be used to do that.

### Problems to Be Solved by the Invention

A task of the invention is to overcome the drawbacks of the prior art. Another task of the invention is to provide a manufacturing method for molded products consisting of hollow moldings of highly heat-resistant thermoplastic resin reinforced with a highly expanded core which have improved rigidity and good recyclability without sacrificing surface smoothness. This is accomplished by using the same type of thermoplastic resin for the skin and the core. A further task of the invention is to provide products manufactured by this method.

### Means of Solving the Problems

The problems of the invention are solved by a manufacturing method for molded products wherein a tubular body with small perforations for spraying steam is inserted through an opening formed in one end of and into the hollow part of, a hollow molding of thermoplastic resin having a heat resistance of at least 100°C₇ the hollow portion of the said hollow molding is packed with particles of an expandable thermoplastic resin similarly having a heat resistance of at least 100°C, the said hollow molding is fitted in a jig having an internal structure corresponding to the external geometry of the molding and having plural openings, and then the said packed expandable thermoplastic resin particles are expanded and fused by introducing steam through the said tubular body into the hollow molding while releasing spent steam and condensed water through an opening formed near the other end of the hollow molding.

In the present invention, polyphenyl ether resin modified with styrene resin is used as the thermoplastic resin for blow-molding products in applications requiring heat resistance and rigidity (for example, large parts such as automobile seat-back panels, rear parcel shelves, and side skirts, as well as front and side panels for office machines).

Furthermore, the problems of the invention are solved by forming hollow molded products from thermoplastic resin having a heat resistance of at least 100°C and then fusing and expanding particles of expandable thermoplastic resin having a heat resistance of at least 100°C inside the hollow moldings in order to increase the rigidity of the hollow moldings.

It is preferred, for reasons of recyclability, that the highly heat-resistant expandable thermoplastic resin used here be the same type of resin as that of the blow molding comprising the outer skin. For example, particles of an expandable thermoplastic resin such as polyphenyl ether modified with styrene resin can be used. Other resins, for example, expandable beads of polypropylene resin or the like, can also be used. Expandable thermoplastic resin particles include both [a] particles obtained by prefoaming expandable thermoplastic resin particles impregnated with a blowing agent and [b] expandable thermoplastic resin particles impregnated with a blowing agent.

### Operation of the Invention

In accordance with the present invention, expandable thermoplastic resin particles are packed through a first opening formed near one end of a hollow molding of predetermined dimensions and outer geometry. The particles are modified in accordance with the volume of the hollow part of the molding and the desired expansion ratio, before or after which a tubular body perforated for spraying steam is inserted. The amount of expandable thermoplastic resin to be packed is determined in view of the amount of blowing agent contained in the expandable thermoplastic resin particles, the final expansion ratio, and the like. Then, the expandable thermoplastic resin particles inside the molding are heated and expanded by introducing steam from the perforated tubular body inserted in the first opening. This ensures that the steam will pass through the second opening formed near the other end of the molding and that condensed water will be discharged.

It is preferred that the second opening be provided at the far end from the first opening in the blow molding. This is because the purpose of the second opening is to allow steam to flow efficiently and to discharge condensed water. The efficient steam flow and condensed water discharge is attributable to the fact that the expandable thermoplastic resin particles packed in the hollow molding expand fully at a higher temperature than the general-purpose resin foams used in the prior art.

A jig covering the hollow molding can be used for controlling the release of steam into the working environment and preventing abnormal deformation of the hollow molding in this process. It is advantageous for this jig to have a structure such that the cavity conforms to the desired outer geometry of the molded product and such that it promotes the discharge of steam and/or condensed water from the molding. Connecting this type of jig to a vacuum apparatus for suctioning the steam and [thereby] creating some negative pressure inside the jig enables the passage of a sufficient volume of steam to ensure foaming while reducing the required pressure of the externally fed steam.

### Working Examples

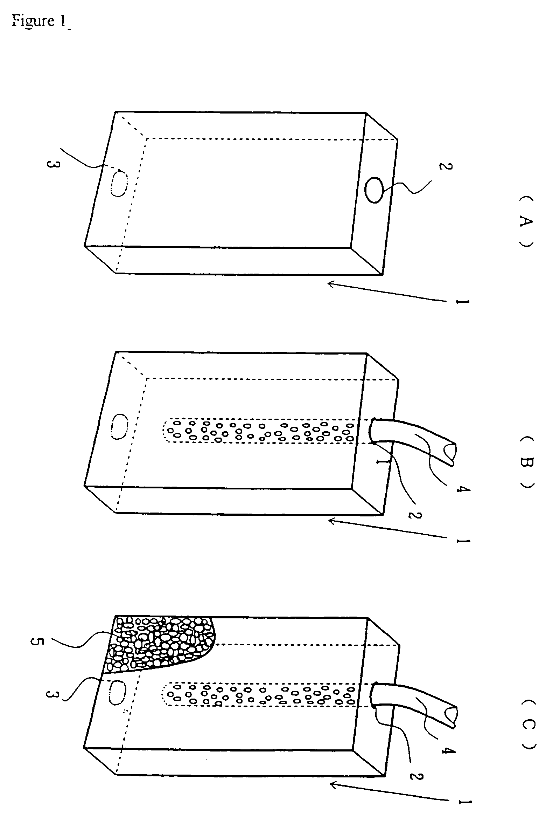

The present invention is disclosed hereinbelow with reference to appended figures illustrating working examples. Polyphenyl ether resin modified with styrene resin was selected as the heat-resistant resin for the hollow molding forming the outer skin of the molded product used in the invention. The hollow molding 1 in Figure 1A was obtained by molding this resin in a conventional blow-molding machine. The first opening 2 and the second opening 3 are formed in the hollow molding 1 during the molding process or later.

The hollow part of this hollow molding was packed with expandable thermoplastic resin particles 5 which consisted of prefoamed styrene-modified polyphenyl ether resin as the highly heat-resistant expandable thermoplastic resin particles, and [then these particles] were expanded inside the cavity by the method described hereinbelow.

In the first working example of the invention, a tubular body 4 which is a heat-resistant soft tube, for example, a poly(tetrafluoroethylene) (Teflon®) tube, with numerous perforations for spraying steam whose end is sealed in order to spread steam uniformly throughout the molding's cavity, is inserted through the first opening 2 into the hollow part of the molding, as shown in Figure 1(B). Then, the cavity is packed with expandable thermoplastic resin particles 5, as shown in Figure 1(C). Then, steam is sprayed from the tubular body 4 for spraying steam.

The steam sprayed from the jets in the tubular body 4 passes through the spaces between the expandable thermoplastic resin particles 5 and expands the surrounding expandable thermoplastic resin particles in succession by transferring its heat to them.

The release of the flowing steam to the exterior through the second opening 3 provided in the molding permits large amounts of thermal energy to be transferred by large amounts of steam. As a result, even highly heat-resistant expandable thermoplastic resin particles can be thoroughly foamed. Furthermore, since the temperature of the steam from which heat is taken during the foaming process drops abruptly and large amounts of condensed water are formed, it is preferable to release this condensed water through the second opening 3 for releasing steam. Accordingly, it is necessary to provide this second opening 3 in the bottom of the hollow molding 1.

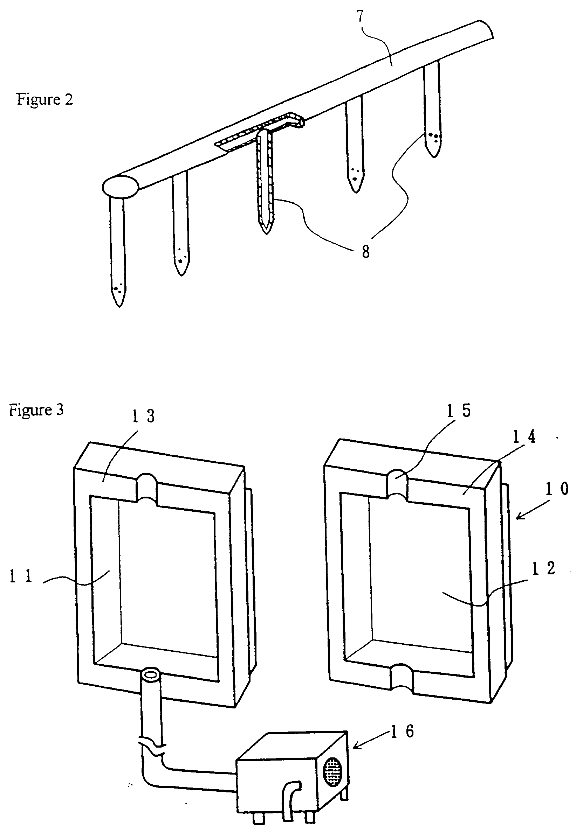

In the second working example of the invention, the structure of the hollow molding allows plural steam injection openings to be formed; here, a multi-branch hard tubular body 7 for spraying steam with plural steam spray nozzles 8, as shown in Figure 2, can be used. Furthermore, if the tips of the tubular body 7 are pointed, steam can be fed by piercing any inconspicuous surface of the hollow molding rather than providing openings in advance.

In this embodiment, the hollow molding is packed with expandable thermoplastic resin particles, and then the respective plural injection nozzles 8 are inserted into the molding, completing the preparations for heating. Then, the expandable thermoplastic resin particles inside the hollow molding can be expanded efficiently and reliably by spraying steam. In this case as well, it is necessary to provide openings for discharging steam and water in the bottom of the hollow molding in the same manner as in the first working example.

In the present invention, a material showing a high heat resistance of at least 100°C is used for the hollow molding formed by blow-molding or other methods, and, in order to obtain high rigidity, thermoplastic resin particles having equally high heat resistance are used as the highly expandable thermoplastic resin packed in the cavity. These highly heat-resistant expandable thermoplastic resin particles must be heated to relatively high temperatures for sufficient expansion. However, when this type of high-temperature heating is performed, the outer skin of the hollow molding begins to soften. Even if this occurs, undesirable deformation of the hollow molding is prevented because the cavity of the jig corresponds to the cavity of the mold used to form the hollow molding.

Providing the jig with a means of suctioning steam facilitates the discharge of steam used for heating in the molding process and enables the operation to be performed using comparatively low-pressure steam. Furthermore, uneven distribution of the expandable thermoplastic resin particles due to the effects of gravity can be avoided by adding another process such as rotating the jig or applying external vibration to it.

This jig consists, for example, as shown in Figure 3, of two parts 13 and 14 with hollow parts 11 and 12 corresponding to the cavity of the mold used for the said molding. Together, they comprise a shape capable of surrounding and accommodating the hollow molding 1 (not shown). It is advantageous for this jig 10 to be provided with a part 15 which does not obstruct the tubular body 4 for spraying steam into the hollow molding 1, shown in Figure 1, and a vacuum device 16 such that the steam and/or condensed water discharged from the second opening 3 can be discharged either naturally or by force.

Engineering plastics such as modified polyphenyl ether resin, polycarbonate resin, and thermoplastic polyester resin as well as resins modified with blends of these polymers may be used as the thermoplastic resin having a heat resistance of at least 100°C in the present invention. These and other resins can be molded into hollow moldings by blow-molding, rotation-molding, injection-molding, or the like.

The highly expandable thermoplastic resin particles to be packed in the interior of the hollow molding can be selected from among any of the materials listed hereinabove and can be caused to contain the desired ratio, by weight, of blowing agent. Rather than naming specific core resins, it is sufficient to say that it is preferable to use the same class of resin as that used in the outer skin of the hollow molding for the sake of recovering and reusing, i.e., recycling, the used product.

### Effect of the Invention

The rigidity of hollow moldings used in applications requiring heat resistance can be greatly improved without sacrificing surface flatness by means of the molding [obtained] in accordance with the manufacturing method for hollow moldings of the invention. The ability to easily fuse the inner walls of the hollow molding and the expandable thermoplastic resin particles in the foaming process is achieved by using hollow moldings and expandable thermoplastic resin particles from the same class of thermoplastic resins.

Furthermore, the used hollow molding can be easily recovered and reused (recycled) as thermoplastic resin by conventional size reduction techniques.

### Brief Description of the Figures

Figure 1
   Figure 1 illustrates the process of the manufacturing method for hollow molded products of the invention.
Figure 2
   Figure 2 shows an example of an alternative structure of the tubular body for injecting steam for carrying out the manufacturing method for molded products of the invention.
Figure 3
   Figure 3 illustrates an example of the structure of the jig for carrying out the manufacturing method for molded products of the invention.

### Description of the Symbols

- 1: Hollow molding
- 2: First opening
- 3: Second opening
- 4: Steam injection tube (soft tubular body)
- 5: Expandable thermoplastic resin particles
- 7: Multi-branch steam injection tube (hard tubular body)
- 8: Injection nozzle
- 10: Jig
- 16: Vacuum device

## Claims

1. Manufacturing method for molded products wherein a tubular body (4) with small perforations for spraying steam is inserted through an opening (2) formed in one end of, and into the hollow part of, a hollow molding (1) of thermoplastic resin having a heat resistance of at least 100°C, the hollow portion of the said hollow molding is packed with particles (5) of an expandable thermoplastic resin similarly having a heat resistance of at least 100°C, the said hollow molding is fitted in a jig (10) having an internal structure corresponding to the external geometry of the hollow molding (1) and having plural openings, and then the said packed expandable thermoplastic resin particles (5) are expanded and fused by introducing steam through the said tubular body (4) into the hollow molding (1) while releasing spent steam and condensed water through an opening (3) formed near the other end of the hollow molding (1).

2. Manufacturing method for molded products in accordance with Claim 1, wherein the said tubular body (4) with numerous perforations is a soft heat-resistant tube which is inserted into the hollow molding before packing the particles (5) of expandable thermoplastic resin.

3. Manufacturing method for molding products in accordance with Claim 1, wherein the said tubular body (4) with numerous perforations is a hard heat-resistant tube which is introduced into the hollow molding after packing the particles (5) of expandable thermoplastic resin.

4. Molded products obtainable by packing the hollow part of a hollow molding (1) consisting of a thermoplastic resin having a heat resistance of at least 100°C with particles (5) of an expandable thermoplastic resin similarly having a heat resistance of at least 100°C. and by expanding and fusing resin particles (5) until they contact the internal walls of the said hollow molding (1).

## Patentansprüche

1. Herstellverfahren für Formkörper, bei welchem ein röhrenartiger Körper (4) mit kleinen Perforationen zum Versprühen von Dampf durch eine Öffnung (2), welche in einem Ende gebildet ist von, und in den hohlen Teil von, einer hohlen Form (1) eingesetzt wird aus thermoplastischem Harz, welches eine Wärmefestigkeit von wenigstens 100 °C aufweist, wobei der hohle Abschnitt der hohlen Form mit Partikeln (5) eines expandierbaren thermoplatischen Harzes gepackt ist, welches ähnlich eine Wärmebeständigkeit von wenigstens 100 °C hat, wobei der hohle Formkörper in einer Aufnahmevorrichtung eingebaut wird, welche eine innere Struktur hat, die der äußeren Geometrie des hohlen Formkörpers entspricht und die über eine Mehrzahl von Öffnungen verfügt, und dann die gepackten expandierbaren thermoplastischen Harzpartikel expandiert und geschmolzen werden, indem man Dampf durch den röhrenartigen Körper (4) in die hohle Form (1) führt, während überschüssiger Dampf abgelassen wird und kondensiertes Wasser durch eine Öffnung (3), welche nahe des anderen Endes des hohlen Formkörpers (1) gebildet ist.

2. Herstellverfahren für Formkörper nach Anspruch 1, bei welchem der röhrenartige Körper (4) mit einer Vielzahl von Perforationen eine weiche hitzebeständige Röhre ist, welche in die hohle Form eingesetzt wird, bevor die Partikel (5) aus expandierbarem thermoplastischen Harz gepackt werden.

3. Herstellverfahren für Formkörper nach Anspruch 1, bei welchem der röhrenartige Körper (4) mit einer Vielzahl von Perforationen eine harte hitzebeständige Röhre ist, welche in die hohle Form eingeführt wird, nachdem die Partikel (5) aus expandierbarem thermoplastischen Harz gepackt wurden.

4. Formkörper, dadurch erhältlich, daß man den hohlen Teil der hohlen Form (1), welche aus einem thermoplastischen Harz mit einer Wärmebeständigkeit von wenigstens 100 °C besteht mit Partikeln (5) aus einem expandierbaren thermoplastischen Harz, das ähnlich eine Wärmebeständigkeit von wenigstens 100 °C aufweist, bepackt und daß man die Harzpartikel (5) expandiert und zum Schmelzen bringt, bis sie die inneren Wände der hohlen Form berühren.

## Revendications

1. Procédé de fabrication pour des produits moulés, dans lequel on insère un corps tubulaire (4) présentant de petites perforations pour pulvériser de la vapeur dans la partie creuse d'un moulage creux (1) par une ouverture (2) formée dans l'une des extrémités de cette partie creuse du moulage creux (1) en résine thermoplastique présentant une résistance à la chaleur d'au moins 100 °C, on remplit la partie creuse dudit moulage creux avec des particules (5) de résine thermoplastique expansible présentant de manière similaire une résistance à la chaleur d'au moins 100 °C, on monte ledit moulage creux dans un gabarit (10) présentant une structure intérieure qui correspond à la géométrie extérieure du moulage creux (1) et présentant plusieurs ouvertures, puis on fait expanser les particules (5) de résine thermoplastique expansible de remplissage, et on les fait fusionner en introduisant de la vapeur par l'intermédiaire dudit corps tubulaire (4) dans le moulage creux (1) tout en libérant la vapeur usée et l'eau condensée à travers une ouverture (3) formée près de l'autre extrémité du moulage creux (1).

2. Procédé de fabrication pour des produits moulés selon la revendication 1, dans lequel ledit corps tubulaire (4) présentant de nombreuses perforations est un tube souple résistant à la chaleur qui est inséré dans le moulage creux avant le remplissage avec des particules (5) de résine thermoplastique expansible.

3. Procédé de fabrication pour des produits moulés selon la revendication 1, dans lequel ledit corps tubulaire (4) présentant de nombreuses perforations est un tube dur résistant à la chaleur qui est introduit dans le moulage creux après le remplissage avec des particules (5) de résine thermoplastique expansible.

4. Produits moulés pouvant être obtenus par remplissage d'une partie creuse d'un moulage creux (1) constitué d'une résine thermoplastique présentant une résistance à la chaleur d'au moins 100 °C, avec des particules (5) de résine thermoplastique expansible présentant de manière similaire une résistance à la chaleur d'au moins 100 °C; et par expansion et fusion des particules (5) de résine jusqu'à ce qu'elles soient en contact avec les parois intérieures dudit moulage creux (1).
